# EUROPEAN PATENT APPLICATION

(11) **EP 1 001 639 A1**
(43) Date of publication of application: **17.05.2000**
(21) Application number: 99119653.6
(22) Date of filing: 04.10.1999
(51) Int. Cl.: H04Q 7/32

(54) **Wireless communication unit programming**

(30) Priority: 13.11.1998 US 191604
(71) Applicant: Siemens Information and Communication Networks, Inc., Boca Raton, Florida 33487 (US)
(72) Inventor: Vu, Trinh D., Coral Springs, FL 33067 (US)
(74) Representative: Kay, Ross Marcel (GB)

(57) **Abstract**

Methods of programming a wireless communication unit having a subscriber identity module. One method includes determining programming data for the wireless communication unit, wirelessly transmitting the programming data from a network operator to the wireless communication unit, and storing the programming data in the wireless communication unit's subscriber identity module. Another method includes identifying a transmission from an uninitialized wireless communication unit needing programming, and initiating programming of the uninitialized wireless communication unit.

## Description

### Background of the Invention

This invention relates generally to wireless communication and more particularly to programming a wireless communication unit.

Wireless communication units (e.g., cellular phone handsets) often store information that control handset functions. This information includes the handset's phone number, an authentication key to prevent unauthorized use, a default communication channel, etc. Much of this information is unknown prior to sale since the information is user specific (e.g., a person's password or service options).

Typically, retail outlets handle different technical and administrative aspects of handset programming. Specially trained technicians at the retail outlet program each handset with user specific information using specially designed programming cradles. Often, at the request of a wireless network service provider, the retail outlets run lengthy credit checks before issuing a programmed handset to a waiting customer. The retail outlet must communicate information gathered back to the network service provider.

### Summary of the Invention

In general, in one aspect, a method of programming a wireless communication unit having a subscriber identity module includes determining programming data for the wireless communication unit, wirelessly transmitting the programming data from a network operator to the wireless communication unit, and storing the programming data in the wireless communication unit's subscriber identity module.

Embodiments may include one or more of the following features. The programming data may include a subscriber phone number and/or unit service options. The wireless communication unit may be a cellular phone. The wireless communication may include an SMS-MT message.

In general, in another aspect, a method of programming a wireless communication unit includes identifying a transmission from an uninitialized wireless communication unit and initiating programming of the uninitialized wireless communication unit.

Embodiments may include one or more of the following. The identifying may include receiving an identification code transmitted by the wireless communication unit and determining whether the identification corresponds to an uninitialized wireless communication unit. The determination may include examining stored data that corresponds to the transmitted identification code. Initiating programming may include routing a call from an uninitialized wireless communication unit to a programming station or one of many programming stations. The method may also include transmitting programming information to the wireless communication unit via wireless communication.

In general, in another aspect, a method of programming a cellular phone having a subscriber identity module includes receiving an identification code transmitted by the cellular phone, examining a corresponding field of a visitor location database that indicates whether the cellular phone corresponding to the transmitted identification code needs programming, routing the call to a programming station for programming, determining programming data for the cellular phone, wirelessly transmitting the programming data from a service provider to the cellular phone using SMS-MT messages, and storing the programming data in the cellular phone's subscriber identity module.

Advantages may include one or more of the following. By wirelessly programming a wireless communication device initialization of the device may take place at a time and place of a subscriber's choosing. Wireless programming also enables a network service provider to avoid the cost of training retail personnel to program a handset. Such programming also eliminates the fee typically paid by a network service provider to a retail store for handset programming.

Other advantages of the invention will become apparent in view of the following description, including the figures, and the claims.

### Brief Description of the Drawing

Reference is made to the following drawings, in which:
FIG. 1 is a diagrammatical sketch of a wireless communication system;
FIG. 2 is a diagrammatical sketch of data and software stored in a wireless communication unit;
FIG. 3 is a diagrammatical sketch of a database accessed by switch software;
FIG. 4 is a flowchart illustrating call authorization by switch software;
FIG. 5 is a flowchart illustrating programming of the wireless communication unit;
FIG. 6 is a flowchart illustrating modification of data stored in wireless communication unit memory.
FIG. 7 is a flowchart illustrating processing of a received message by subscriber identity module (SIM) software.

### Description of the Preferred Embodiments

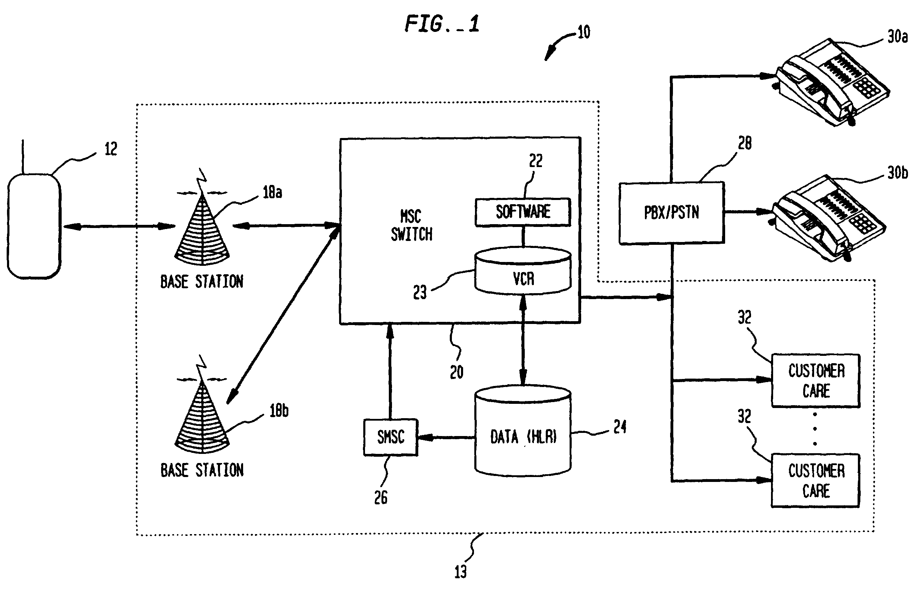

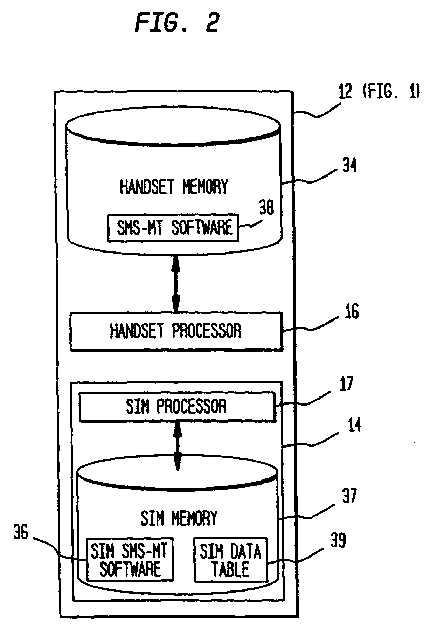

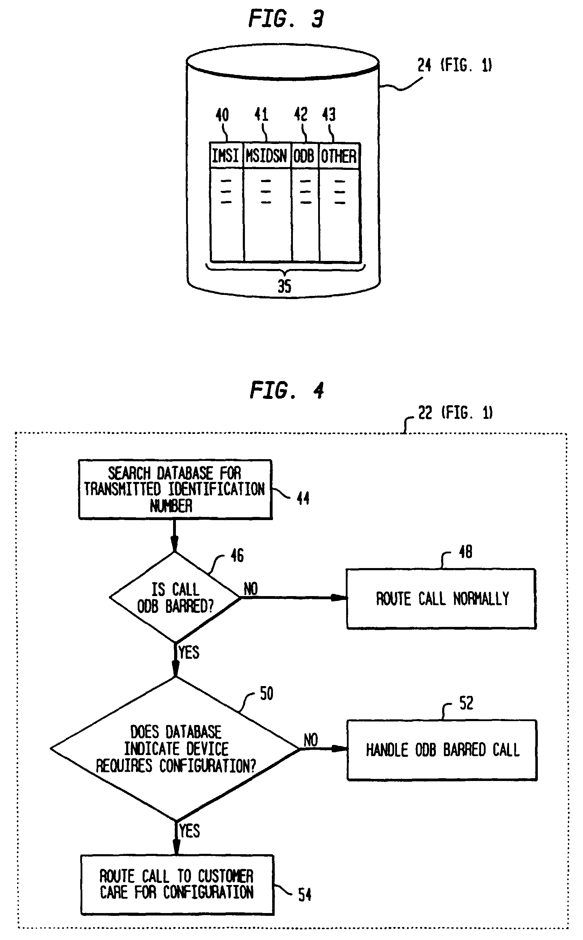

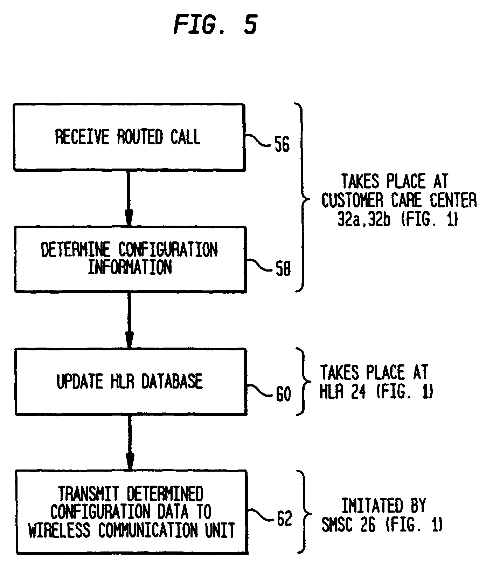

Referring now to FIG. 1, a wireless communication system 10 enables a wireless communication unit 12 (e.g., a cellular phone handset) to communicate with telecommunications equipment 28, 30a-30b via a network service provider 13 base station 18a, 18b and mobile switching center (MSC) 20.

Handset 12 communication begins with transmission of identification information (e.g., an IMSI as described below) to the MSC 20 over a wireless communication channel. MSC software 22 can authorize communication by examining subscriber profile data in a Visitor Location Register (VLR) database 23 for information that corresponds to the transmitted handset identification information. The subscriber profile data is stored in the VLR database 23 when received from a Home Location Register (HLR) database 24 in response to caller registration in an area covered by the MSC 20. The MSC software 22 can authorize communication based on the VLR database 23 information and can connect the handset 12 to telephones 30a and 30b (or other telecommunications equipment) via a private branch exchange (PBX) 28 or public switched telephone network (PSTN). If the MSC software 22, however, determines the handset 12 has not been initialized, the MSC software 22 can reroute handset 12 communication to one of up to fifteen different customer care centers 32a-32b (i.e., programming stations) for programming.

After verification of credit and user identity, an operator at a customer care center 32a-32b programs a handset 12 by updating the HLR database 24. Updating the HLR database 24 triggers a new message to a short message service center (SMSC) 36 to format a programming message for transmission to the handset 12 via the MSC 20 and base station system 18a. By wirelessly programming a handset 12, a service provider eliminates the cost of training store technicians and/or the substantial cost of paying retailers for this service. Additionally, a purchaser can go through the programming process at a time and place of their own convenience. Further, automatically intercepting calls protects service providers from unauthorized use of handsets 12 before a customer is verified.

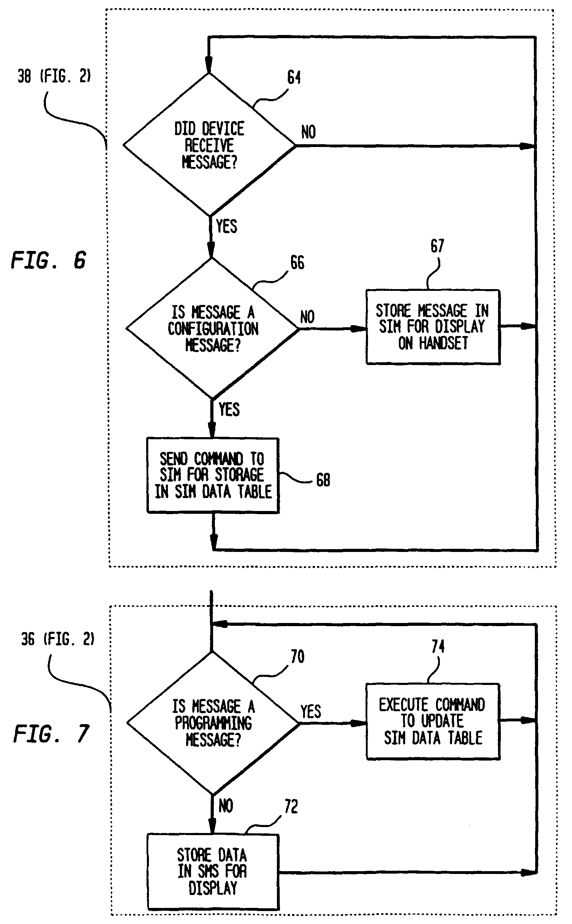

Referring to FIG. 2, the handset 12 includes a processor 16, memory 34 and a removable subscriber identity module (SIM) 14. The SIM 14 includes its own memory 37 and processor 17. The handset 12 processor 16 can execute Short Message Service - Mobile Terminated (SMS-MT) software 38 stored in memory 34. The SMS-MT software 38 can process messages sent from the base station 18a to the handset 12 for storage in SIM 14. These messages can include messages intended for display on the handset 12 and messages that include programming data for storage in the SIM 14.

The SIM 14 includes SIM short message service software 36 in SIM memory 37. The short message service software 36 receives messages from the mobile equipment SMS-MT software 38 and stores the information in a SIM data table 39. A handset distributor can store certain user independent data in the data table 39 prior to sale of the handset. The information stored prior to sale can include an International Mobile Subscriber Identity (IMSI) identification code that uniquely identifies a wireless communication subscriber. The information can also include a Home Personal Communication Network (HPCN) code that identifies the subscriber's home network.

The SIM data table 39 stores other data such as a Mobile Subscriber Integrated Services Digital Network (MSISDN) code (i.e., the subscriber phone number), an authentication code that secures a handset 12, a ciphering key that encrypts communication, and a language preference variable that controls display of text on a handset. The table 39 also stores channel information such as a forbidden PCN code that identifies a service network the handset 12 cannot access, and a Broadcast Control Channel (BCCH) code that controls the channel a handset monitors for incoming communication. A service provider may download different SIM data table 39 values to the handset using SMS-MT messages.

Referring now to FIG. 3, HLR database 24 includes a table 35 that stores data 41, 42, 43 corresponding to an IMSI code 40. This data includes an "operator determined barring" (ODB) flag 42. The ODB flag 42 can indicate that a call initiated using a particular IMSI 40 should not be connected. A provider may set an ODB flag 42 if a handset is reported stolen or if a customer has failed to pay a bill.

The database 24 also stores an MSISDN 41 code. By storing an MSISDN code 41 within a predefined range prior to handset programming, the MSISDN code 41 acts as a flag warning switch software of uninitialized handset use. That is, when the MSC software 22 examines a copy of the subscriber profile data in the VLR 23 (which is sent by the HLR 24) for the MSISDN 41 corresponding to an IMSI 40 that initiated a call, the MSC software 22 can determine whether the handset producing the call has been programmed.

Referring now to FIG. 4, the MSC software 22 identifies IMSI codes of unauthorized handsets (i.e., handsets requiring programming). The MSC software searches (44) the VLR 23 for a table entry corresponding to a received IMSI. By examining the ODB flag (46), the MSC software can determine if the handset initiating the call has been barred. If not, the MSC software 22 can route the call normally. If the ODB flag has been set, however, the MSC software 22 can determine if the handset requires programming by examining (50) the MSISDN that corresponds to the received IMSI. If the MSISDN falls within a predetermined range, the MSISDN acts as a flag indicating that a handset requires programming. Thus, the MSC software can route (54) the call to a customer care center for programming. The MSC software can select from up to fifteen different customer care centers based on the received IMSI. For example, by examining data bits in the IMSI that indicate a location of an HLR, the MSC software can transfer the caller to a customer care center that handles programming for that location.

Referring now to FIG. 5, an operator at the customer care center 32a-32b programs a handset after receiving (56) a call routed by the MSC software. A customer care operator or operator software collects (58) information from a caller needed to perform a credit check and determine handset settings. An operator at the customer care center 32a-32b updates (60) the HLR database based on the information collected. This update includes storing a valid MSISDN number for the handset IMSI code, thereby authorizing the handset for subsequent use. The HLR 24 update, in turn, triggers a message to the SMSC 26 to produce an SMS-MT programming message (62) for transmission to the handset and storage in the SIM.

Referring now to FIG. 6, the handset SMS-MT software 38 monitors receive messages (64) for programming of the SIM (66). Upon receiving a programming message, the SMS-MT software 38 analyzes the message and sends it to the SIM (68). Referring now to FIG. 7, if the message is a programming message (70), the SMS-MT software 36 on the SIM updates (72) the SIM data table 39 using data extracted from the message. The handset, having been programmed and having been granted authorization to make calls, may now make calls as normal.

Other embodiments are within the spirit and scope of the appended claims.

## Claims

1. A method of programming a wireless communication unit having a subscriber identity module, the method comprising:
determining programming data for the wireless communication unit;
wirelessly transmitting the programming data from a network operator to the wireless communication unit; and
storing the programming data in the wireless communication unit's subscriber identity module.

2. The method of claim 1, wherein the programming data comprises at least one of the following: a subscriber phone number and unit service options.

3. The method of claim 1, wherein the wireless communication unit comprises a cellular phone.

4. The method of claim 1, wherein the wireless communication comprises SMS-MT messages.

5. A method of programming a wireless communication unit, the method comprising:
identifying a transmission from an uninitialized wireless communication unit needing programming; and
initiating programming of the uninitialized wireless communication unit.

6. The method of claim 5, wherein identifying comprises:
receiving an identification code transmitted by the wireless communication unit; and
determining whether the identification corresponds to an uninitialized wireless communication unit.

7. The method of claim 6, wherein determining comprises examining stored data that corresponds to the transmitted identification code.

8. The method of claim 5, wherein initiating programming comprises routing a call from an uninitialized wireless communication unit to a programming station.

9. The method of claim 8, wherein routing a call comprises routing a call from an uninitialized wireless communication unit to one of a plurality of programming stations.

10. The method of claim 5, further comprising
transmitting programming information to the wireless communication unit via wireless communication.

11. A method of programming a cellular phone having a subscriber identity module, the method comprising:
receiving an identification code transmitted by the cellular phone;
examining a corresponding field of a location register database that indicates whether the cellular phone corresponding to the transmitted identification code needs programming;
routing the call to a programming station for programming;
determining programming data for the cellular phone;
wirelessly transmitting the programming data from a service provider to the cellular phone using SMS-MT messages; and
storing the programming data in the cellular phone's subscriber identity module.
